# EUROPÄISCHE PATENTANMELDUNG

(11) **EP 1 921 361 A1**
(43) Veröffentlichungstag der Anmeldung: **14.05.2008**
(21) Anmeldenummer: 06023164.4
(22) Anmeldetag: 07.11.2006
(51) Int. Cl.: F16K 41/10

(54) **Ventil mit einem Wellkompensator**

(71) Anmelder: SIEMENS AKTIENGESELLSCHAFT, 80333 München (DE)
(72) Erfinder: Geist, Richard, 91207 Lauf (DE)

(57) **Zusammenfassung**

Die Erfindung betrifft ein Ventil (1), das eine Spindel (2) aufweist, die ein, einer Öffnung (11) zugeordnetes Verschlusselement (3) aufweist, wobei die Spindel (2) in einer Spindelführung (6) geführt ist. Der Spindel (2) ist ein Ausgleichselement (22) zugeordnet.

## Beschreibung

Die Erfindung betrifft ein Ventil, das eine Spindel aufweist, die ein, einer Öffnung zugeordnetes Verschlusselement aufweist, wobei die Spindel in einer Spindelführung geführt ist.

Derartige Ventile werden beispielsweise an Strömungsmaschinen wie z.B. Dampfturbinen eingesetzt und sind verstellbar um eine Menge eines Strömungsmediums, beispielsweise Dampf zu der Strömungsmaschine zu steuern. Bekannt ist, die Ventile als Einsitz- oder Doppelsitzventil auszuführen. Einsitzventile können beispielsweise als entlastete oder als nicht entlastete Einsitzventile ausgeführt sein.

Doppelsitzventile können mit einer relativ geringen Verstellkraft verstellt werden. Der Vorteil der entlasteten Einsitzventile gegenüber nicht entlasteten Einsitzventilen ist darin zu sehen, dass die entlasteten Einsitzventile mit einer sehr viel geringeren Verstellenergie bzw. -kraft als die nicht entlasteten Einsitzventile verstellt werden können.

Als ein Hauptnachteil der entlasteten Einsitzventile ist anzusehen, dass diese relativ kompliziert ausgeführt sind, da ein zusätzliches Entlastungsorgan notwendig ist.

Als ein Hauptnachteil der nicht entlasteten Einsitzventile ist anzusehen, dass die zum Öffnen erforderliche große Stellkraft nur durch eine entsprechend stark ausgelegte Hilfsvorrichtung, z.B. durch einen Hochdruckservomotor aufgebracht werden kann.

Der Erfindung liegt die Aufgabe zugrunde, ein Ventil der Eingangs genannten Art, insbesondere ein nicht entlastetes Einsitzventil mit einfachen Mitteln dahingehend zu verbessern, dass die erforderliche Stellkraft zum Öffnen reduziert ist.

Erfindungsgemäß wird die Aufgabe dadurch gelöst, dass der Spindel ein Ausgleichselement zugeordnet ist. Günstiger Weise ist das Ausgleichselement als Kompensator, vorzugsweise als Wellkompensator ausgeführt.

In bevorzugter Ausgestaltung umfasst das Ausgleichelement die Spindel vollumfänglich und ist kopfseitig dichtend zur Spindelführung und/oder zu einem Ventilgehäuse angeordnet und fußseitig mit dem Verschlusselement verbunden. Somit wird vorteilhaft ein von dem Ausgleichselement umfasster Innenraum geschaffen, in dem die Spindel axial verlaufend angeordnet ist, wobei bevorzugt vorgesehen ist, dass die Spindel mit ihrer Mittelachse koaxial zur Mittelachse des Ausgleichselements ist.

In bevorzugter Ausgestaltung ist das Ausgleichselement in Axialrichtung gesehen, also von der Fußseite zur Kopfseite hin flexibel ausgeführt, so dass sich das Ausgleichselement zusammenziehen und wieder entspannen kann.

Zweckmäßig im Sinne der Erfindung ist, wenn die Spindelführung eine Durchlassöffnung aufweist, die zu dem von dem Ausgleichselement umfassten Innenraum hin geöffnet ist.

Mittels der Durchlassöffnung ist der von dem Ausgleichselement umfasste Innenraum zur Umgebung hin geöffnet, so dass in dem Innenraum der Umgebungsdruck herrscht, wodurch die Stellkräfte zum Öffnen des Ventils stark reduziert werden können.

Üblicherweise steht in dem Ventilgehäuse der Strömungsdruck (z.B. Dampfdruck) des Strömungsmediums an, welches zur Strömungsmaschine gesteuert werden soll.

Der beispielhafte Dampfdruck steht an einer Mantelfläche bzw. an einer Außenseite des Ausgleichselementes an, und versucht dieses zusammenzudrücken, und wirkt so dem Dampfdruck, der auf das Verschlusselement einwirkt entgegen.

Wird die Spindel nun beispielsweise mit einem Servomotor betätigt, so dass das Ventil zur Strömungsmaschine hin öffnet, bewirkt der Dampfdruck ein Zusammenziehen des Ausgleichselementes in Richtung zu seiner Kopfseite, und entlastet gleichzeitig den Servomotor, so dass dieser im Vergleich zum Stand der Technik nicht die ursprünglich erforderliche hohe Stellkraft aufbringen muss, sondern das Ventil mit geringeren Stellkräften öffnen kann, da der auf das Ausgleichselement wirkende Dampfdruck dem auf das Verschlusselement wirkenden Dampfdruck quasi entgegenwirkt.

Das Ausgleichselement hat aber nicht nur die Funktion zur Reduzierung der Stellkräfte sondern besitzt zudem noch eine dichtende Funktion zur Spindel hin, so dass auf bisher erforderliche Dichtvorkehrungen, wie z.B. Stopfbuchsenpackungen an der Ventilspindel verzichtet werden kann.

Vorteilhaft wirkt das Ausgleichselement quasi wie ein Kraftspeicher, z.B. wie eine Feder und kann das Ventil bei Druckabfall im Servomotor schließen.

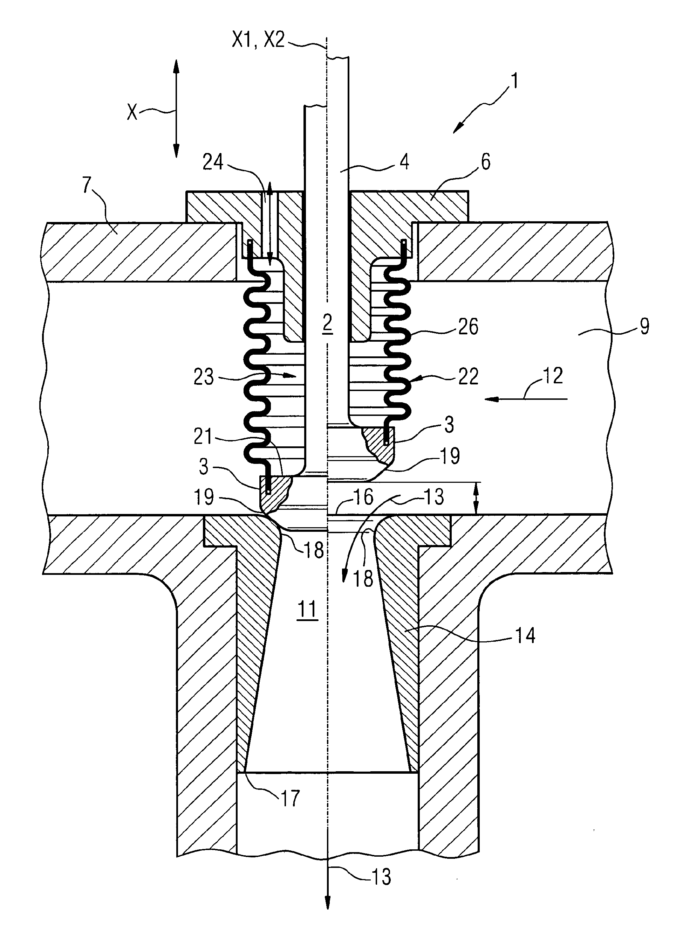

Weitere vorteilhafte Ausgestaltungen der Erfindung sind in den Unteransprüchen und der Folgenden Figurenbeschreibung offenbart. Es zeigt die einzige
- Fig. 1: einen Querschnitt durch ein nicht entlastetes Einsitzventil.

Figur 1 zeigt ein Ventil 1 in bevorzugter Ausgestaltung als nicht entlastetes Einsitzventil. Das Ventil 1 weist eine Spindel 2 auf. Die Spindel 2 trägt fußseitig ein Verschlusselement 3 bzw. einen Ventilkegel, welches in der dargestellten Ausgestaltung tellerartig ausgeführt ist. Die Spindel 2 ist mit ihrer Stange 4 in einer Spindelführung 6 geführt, so dass diese in Axialrichtung X gesehen beweglich ist.

Die Spindelführung 6 ist in einem Ventilgehäuse 7 aufgenommen und hinreichend mit diesem verbunden. Die Spindel 2 ist mit ihrem Verschlusselement 3 innerhalb des Ventilgehäuses 7 angeordnet, wobei die Spindelstange 4 aus dem Gehäuse 7 herausragt und mit einer Hilfsvorrichtung zum Betätigen der Spindel 2, beispielsweise mit einem Servomotor verbunden ist.

Das Ventilgehäuse 7 weist einen Mediumkanal 9 und eine Öffnung 11 bzw. einen Auslasskanal auf. In dem Mediumkanal 9 steht ein Mediumstrom (Pfeil 12), beispielsweise Dampf an.

In der linken Zeichnungsebene von Figur 1 ist das Ventil 1 in einer geschlossenen Stellung dargestellt, wobei in der rechten Zeichnungsebene eine geöffnete Stellung des Ventils 1 darstellt ist. In der geöffneten Stellung öffnet das Ventil 1 zu dem Auslasskanal 11, so dass der Mediumstrom zu einer Strömungsmaschine, z.B. zu einer Dampfturbine gesteuert werden kann (Pfeil 13). '

In dem Auslasskanal 11 ist ein Diffusor 14 angeordnet, der sich von einer Mündung 16 des Mediumkanals 9 in den Auslasskanal 11 in Richtung zu einem der Mündung 16 gegenüberliegenden Ende 17 verjüngt.

Im Bereich der Mündung 16 ist eine Anlagefläche 18 des Diffusors 14 abgerundet, wobei eine dazu korrespondierende Gegenanlagefläche 19 des Verschlusselementes 3 entsprechend dazu ausgeführt ist. In der geschlossenen Stellung des Ventils 1 liegt die Gegenanlagefläche 19 an der Anlagefläche 18 an, wie der linken Zeichnungsebene der Figur 1 entnehmbar ist. An der zur Gegenanlagefläche 19 gegenüberliegenden Oberfläche 21 ist das Verschlusselement 3 im Wesentlichen eben ausgeführt.

In dem Ventilgehäuse 7 ist der Spindel 2 ein Ausgleichselement 22 zugeordnet. Das Ausgleichselement ist als Kompensator, bevorzugt als Wellkompensator ausgeführt.

Das Ausgleichselement 22 umfasst die Spindel 2 bzw. die in dem Gehäuse 7 verlaufende Spindelstange 4 vollumfänglich, und ist kopfseitig dichtend mit der Spindelführung 6 verbunden. Fußseitig ist das Ausgleichselement 22 mit dem Verschlusselement 3 verbunden.

Das Ausgleichselement 22 bildet einen Innenraum 23 in dem Ventilgehäuse 7, wobei einen Mittelachse X1 der Spindel 2 bzw. ihrer Stange 4 koaxial zur Mittelachse X2 des Innenraums 23 ist.

Das Ausgleichselement 22 ist in Axialrichtung X gesehen flexibel ausgeführt, so dass sich zusammenziehen und entspannen kann, wie den beiden Zeichnungsebenen in der geschlossenen (linke Zeichnungsebene) und geöffneten Stellung (rechte Zeichnungsebene) des Ventils 1 zu entnehmen ist.

In der Spindelführung 6 ist eine Durchlassöffnung 24 eingebracht, die in den Innenraum 23 mündet, so dass der Innenraum 23 zur Umgebung hin geöffnet ist. In dem Innenraum 23 herrscht somit ein Umgebungsdruck.

Der Mediumdruck, z.B. der Dampfdruck wirkt auf eine Mantelfläche 26 des Ausgleichselementes 22 und versucht dieses zusammenzudrücken. Wird nun die Spindel 2 mittels des beispielhaft genannten Servomotors betätigt, also das Ventil 2 geöffnet, bewirkt der auf die Mantelfläche 26 wirkende Dampfdruck eine Unterstützung der Öffnungsbewegung, so dass die erforderliche aufzubringende Stellkraft des beispielhaften Servomotors zum Öffnen des Ventils 1 im Vergleich zum Stand der Technik erheblich reduziert werden kann.

### Bezugszeichenliste

- 1.: Ventil
- 2.: Spindel
- 3.: Verschlußelement (Ventilkegel)
- 4.: Stange/Spindelstange
- 6.: Spindelführung
- 7.: Ventilgehäuse
- 9.: Mediumkanal
- 11.: Öffnung/Auslaßkanal
- 12.: Mediumstrom
- 13.: Pfeil
- 14.: Diffusor
- 16.: Mündung
- 17.: Ende
- 18.: Anlagefläche
- 19.: Gegenanlagefläche
- 21.: Oberfläche
- 22.: Ausgleichselement
- 23.: Innenraum
- 24.: Durchlassöffnung
- 26.: Mantelfläche

## Patentansprüche

1. Ventil, das eine Spindel (2) aufweist, die ein, einer Öffnung (11) zugeordnetes Verschlusselement (3) aufweist, wobei die Spindel (2) in einer Spindelführung (6) geführt ist,
**dadurch gekennzeichnet, dass**
der Spindel (2) ein Ausgleichselement (22) zugeordnet ist.

2. Ventil nach Anspruch 1,
**dadurch gekennzeichnet, dass**
das Ausgleichselement (22) als Kompensator ausgeführt ist.

3. Ventil nach Anspruch 1 oder 2,
**dadurch gekennzeichnet, dass**
das Ausgleichselement (22) die Spindel (2) vollumfänglich umfasst, wobei kopfseitig dichtend zur Spindelführung (6) angeordnet ist, wobei das Ausgleichselement (22) fußseitig mit dem Verschlusselement (3) verbunden ist.

4. Ventil nach einem der vorhergehenden Ansprüche,
**dadurch gekennzeichnet, dass**
das Ausgleichselement (22) flexibel ausgeführt ist.

5. Ventil nach einem der vorhergehenden Ansprüche,
**dadurch gekennzeichnet, dass**
die Spindelführung (6) eine Durchlassöffnung (24) aufweist, die zu einem von dem Ausgleichselement (22) gebildeten Innenraum (23) hin geöffnet ist.
